# EUROPEAN PATENT SPECIFICATION

(11) **EP 3 552 882 B1**
(45) Date of publication and mention of the grant of the patent: **19.10.2022**
(21) Application number: 18167016.7
(22) Date of filing: 12.04.2018
(51) Int. Cl.: B60R 11/04

(54) **MOUNTING APPARATUS FOR MOUNTING A COVER MEMBER TO A SURFACE OF A VEHICLE**
BEFESTIGUNGSVORRICHTUNG ZUM BEFESTIGEN EINER ABDECKUNG AUF DER OBERFLÄCHE EINES FAHRZEUGS
DISPOSITIF DE MONTAGE POUR MONTER UN CACHE SUR LA SURFACE D'UN VÉHICULE

(43) Date of publication of application: 16.10.2019
(73) Proprietor: Alpine Electronics, Inc., Tokyo (JP)
(72) Inventor: Surugiu, Florin, 70567 Stuttgart (DE)
(74) Representative: Schmitt-Nilson Schraud Waibel Wohlfrom Patentanwälte Partnerschaft mbB

(56) References cited:
- WO-A1-2017/011568
- DE-U1-202015 103 795
- JP-U- H0 545 679

## Description

The invention is related to a mounting apparatus for mounting a cover member to a surface of a vehicle.

Drivers may wish to place a camera, measuring equipment or other portable devices on a vehicle surface to record their driving route or to record other videos of a trip when driving with their vehicle. One possibility for placing a camera with respect to a vehicle is mounting it outside or inside the vehicle, e.g. on a surface of the vehicle, such as the roof of a car. However, the drivers may not want to drive around with the camera at all times. Thus, the mounting apparatus for those portable devices should be removably attached to the vehicle.

JP 1993-045679 shows a camera mounting apparatus with five magnetic segments that are linked in a row. When being placed on a car or a motorbike, all five magnetic segments are in contact with a magnetic surface formed by a hood of the car or a gas tank of the motorbike. To remove the mounting apparatus, an outer magnetic segment is lifted and then the magnetic segments are removed one after another from the magnetic surface.

JP 1993-097000 A shows an in-vehicle photographing instrument comprising a base, a turntable and a camera arranged on the turntable, the base being held in position on a magnetic surface by using magnets and the turntable being rotatable to provide different views for the camera. In order to remove the in-vehicle photographing instrument, the in-vehicle photographic instrument is lifted at a first end of the in-vehicle photographing instrument towards a second end.

WO 2017/011568 A1 shows a sensor housing system used to monitor lifetime of a motor or other device. A protected housing shields a microprocessor and several sensors. The housing is positionable on a surface via magnetic attraction.

Accordingly, it would be beneficial to provide a mounting apparatus for removably mounting a cover member to a surface of a vehicle that provides a secure fixation on the surface of the vehicle and that, on the other hand, can be removed from the surface of the vehicle more easily.

The invention relates to a mounting apparatus according to claim 1. Further embodiments are disclosed in the dependent claims. The mounting apparatus allows portable devices, e.g. portable measurement devices, action cameras, light sources, and so on, to be fixed on a surface of a vehicle.

The invention relates to a mounting apparatus for mounting a cover member to a surface of a vehicle comprising: a holding member extending in a first direction and a second direction and having a first magnet receiving portion and a second magnet receiving portion; a cover member that at least partially covers the holding member; a first magnet positioned in the first magnet receiving portion; and a second magnet positioned in the second magnet receiving portion; wherein the first and second magnets are configured for removably fixing the holding member on the surface of the vehicle through magnetic attraction force in interaction with the surface of the vehicle; wherein the holding member has a boundary portion flexibly connecting the first magnet receiving portion to the second magnet receiving portion at respective facing ends of the first and second magnet receiving portions; the cover member is connected to the boundary portion such that, when the cover member is pulled in a third direction at an angle to the first and second directions while the mounting apparatus is attached to the surface, the boundary portion is lifted from the surface and each of the facing ends of the first magnet receiving portion and the second magnet receiving portion is lifted from the surface prior to opposite ends of the first magnet receiving portion and the second magnet receiving portion being lifted from the surface; further comprising a tension member that is positioned between the holding member and the cover member and that is configured to provide a resetting force to the holding member in a direction away from the cover member when the boundary portion is lifted from the surface.

The mounting apparatus while providing secure fixation to the surface of the vehicle allows a user to easily remove the mounting apparatus from the surface by simply pulling on the cover member in the third direction to the surface. For example, the third direction is perpendicular to the surface. The mounting apparatus is easy to use for a user, since the user only has to pull on the cover member to remove the mounting apparatus. With pulling or lifting the cover member, the facing ends of the magnet receiving portions adjacent to the boundary portion are lifted prior to any parts of the magnet receiving portions further away from the boundary portion. This reduces the magnetic attraction force of parts of the magnets positioned in the magnet receiving portions on the surface when pulling the cover member.

The holding member may have a rectangular shape extending in the first and second directions. Other shapes like a circular shape or an elliptical shape are possible as well.

The first magnet receiving portion and the second magnet receiving portion are both configured to receive a magnet each removably fixing the mounting apparatus on the surface by magnetic attraction forces.

The first and the second magnets may have any shape, particularly a rectangular shape for fitting into a rectangular shape of the holding member. In other embodiments more than two magnets may be used in the mounting apparatus.

According to an embodiment, the cover member is configured to cover the holding member, such that the holding member is at least partially obstructed from view when being positioned on the surface. The cover member may have any shape to achieve this purpose. Preferably, the cover member has a rib-like form. In order to provide a rib-like form, a body of the cover member has a hollow main body forming a cavity in which the holding member can be positioned, and two or more sidewalls. The sidewalls preferably extend in the third direction from a bottom part and are connected to each other at a top of the main body which is opposite to the bottom part. The sidewalls may have a convex shape or a concave shape, e.g. to improve aerodynamic properties. When attaching the mounting apparatus to a surface of a vehicle, e.g. a car or a motorcycle, it is preferable to arrange the side walls such that an airflow flows along the side walls around the mounting apparatus to provide a better aerodynamic characteristic.

The cover member may comprise any kind of material, preferably a plastic or an aluminum material.

The boundary portion is configured to flexibly connect the first magnet receiving portion to the second magnet receiving portion. In other words, the boundary portion is independently moveable with respect to the first magnet receiving portion and the second magnet receiving portion.

The third direction is at an angle toward the first direction and the second direction. Preferably at an angle is in a range of 80° to 100° with respect to the first plane formed by the first and second direction. Most preferably, at a perpendicular angle.

The mounting apparatus further comprises a tension member that is positioned between the holding member and the cover member and that is configured to provide a resetting force or counterforce to the holding member in a direction away from the cover member when the boundary portion is lifted from the surface. The tension member may form a cavity and the holding member is positioned in the cavity, which is configured to guide the holding member when the boundary portion is lifted from the surface and to provide the resetting force. The tension member brings the holding member in an initial or attaching position.

The tension member can be configured to bias the holding member in an attaching or initial position. The attaching position of the holding member is a position of the holding member prior to attaching the mounting apparatus to the surface. The attaching position is a position in which the holding member and the magnets are positioned in a plane which is approximately parallel to a surface of a vehicle. With these features it is easy to position the mounting apparatus at a predetermined position, since additional movements resulting from the magnets positioning themselves on the surface are prevented.

The holding member may have at least one side wall attached to the opposite end of the first magnet receiving portion or the opposite end of the second magnet receiving portion. The side wall extends in the third direction. The side wall may comprise a top end opposite to an end with which the side wall is attached to the opposite end of the first magnet receiving portion or the opposite end of the second magnet receiving portion for abutting against the tension member. Preferably, the top end of the at least one side wall has a rounded shape. According to one embodiment of the invention, each magnet receiving portion comprises a side wall for abutting against the tension member.

In one embodiment, the top end of the at least one side wall of the holding member is in contact with the tension member. The tension member is configured to provide a resetting force to the top end of the at least one side wall. The resetting force returns the holding member to its initial position after removing the mounting apparatus from the surface by pulling on the cover member. The resetting force results from a deformation of the cavity of the tension member and/or from the at least one side wall when the mounting apparatus is lifted from the surface and the at least one side wall abuts an inner surface of the cavity.

The holding member can be elastic. This means that, if the holding member is deformed, it returns into its original shape, when released. This allows the holding member to better adapt to the surface to which the mounting apparatus may be attached.

At least one of the first and second magnets can be removably attached to the holding member. This allows a user to replace or repair a defective magnet without special tools or by damaging the holding member.

The boundary portion may comprise a first flexible interlinkage to connect the boundary portion to the facing end of the first magnet receiving portion, and a second flexible interlinkage to connect the boundary portion to the facing end of the second magnet receiving portion. This is a cheap but effective solution to flexibly connect the boundary portion with the first and the second magnet receiving portion.

The first interlinkage can be located at a top portion of the holding member, wherein the top portion faces the cover member and is positioned at a distance to a plane of a bottom surface of the first and second magnet receiving portions of the holding member directed towards the surface.

The first interlinkage and the second interlinkage may be formed of thin material bridges using the same material as the holding member. This is a cost effective way to provide movability between the boundary portion and the magnet receiving portions. In an alternative embodiment, the first and second interlinkage may be made of a different material than the holding member, to adjust the flexibility between the boundary portion and the magnet receiving portions.

The cover member can be configured to cover the holding member such that only a bottom surface of the mounting apparatus is accessible. This prevents pollution, e.g leaves, spray, dirt, to enter a space between the holding member and the cover member. In order to prevent scratches on the surface by the cover member, the bottom part of the cover member may comprise a soft material.

The cover member can be attached to the boundary portion using a removable first fastener element, particularly a bolt or a screw. This allows to quickly replace a defective cover member or holding member with a new cover member or holding member.

The mounting apparatus may comprise at least one second fastener element that is configured to fasten the cover member to the opposite end of at least one magnet receiving portion of the holding member such that the cover member cannot be pulled in the third direction. In other words, this second fastener element is positioned such that the cover member and the holding member are unmovably fixed to each other to prevent any relative movement between the cover member and the magnet receiving portions of the holding member to avoid unwanted removal of the mounting apparatus from the surface.

An exemplary embodiment of the invention will be described in the following with respect to the enclosed Figures.
Figure 1 illustrates a schematic view of a mounting apparatus according to an exemplary embodiment of the invention.
Figure 2 illustrates a schematic view onto a bottom side of the mounting apparatus shown in Figure 1.
Figure 3 illustrates a schematic view of a holding member of the mounting apparatus shown in Figure 1.
Figure 4 illustrates a cross-sectional view of the mounting apparatus shown in Figure 1.
Figures 5a and 5b illustrate steps of removing the mounting apparatus shown in Figure 1 from a surface.

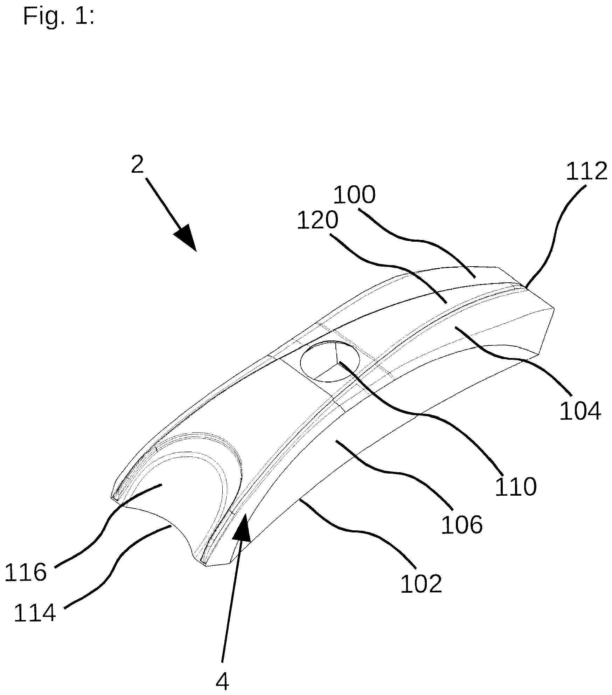

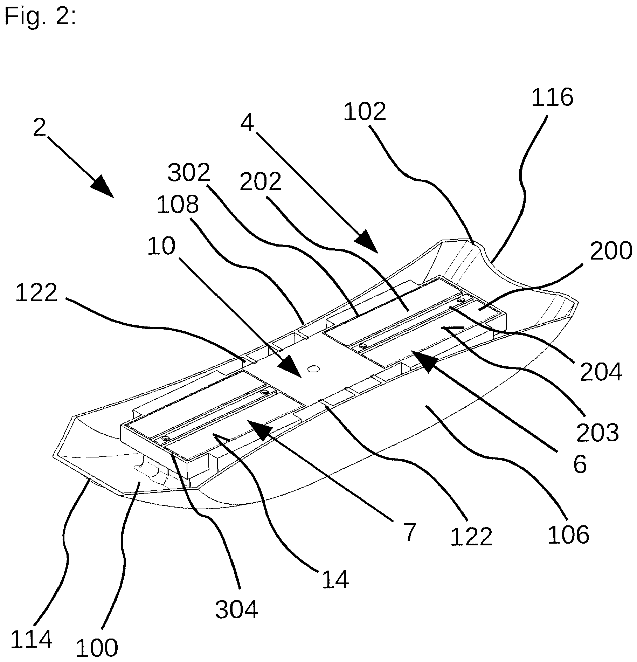

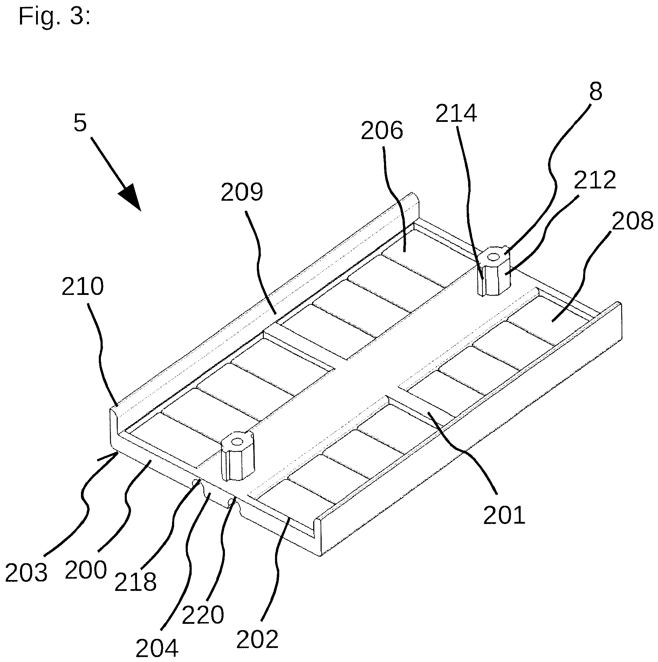

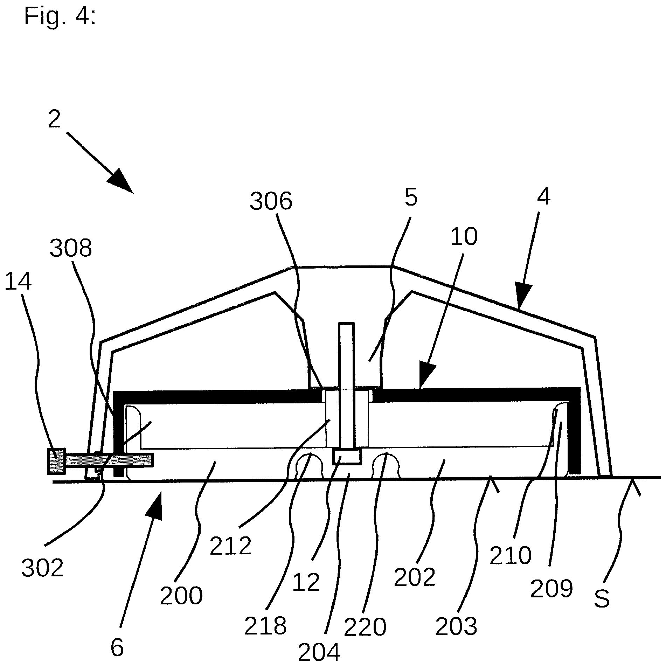

Fig. 1 shows a mounting apparatus 2 for mounting a cover member 4 to a surface of a vehicle. The cover member 4 may comprise a mounting element 110 to fix portable devices to the cover member 4. Fig. 2 shows the mounting apparatus 2 from a bottom side of the mounting apparatus 2 formed by two holding members 6. Alternatively, the mounting apparatus 2 may comprise only one or more than two holding members. Fig.3 shows a schematic view of one of the holding members 6 and 7 from a side onto which the cover member 4 is positioned. Fig. 4 shows a cross-sectional view of the mounting apparatus 2 and is directed along a longitudinal extension of the mounting apparatus 2. In Fig.4, the surface S is shown on which the mounting apparatus 2 can be positioned.

The mounting apparatus 2 comprises the cover member 4, two holding members 6 and 7, and optionally a tension member or chassis 10. The cover member 4 comprises at least one female port 5 to which the holding members 6 and 7 are connected through connection portions 8 in the holding members 6 and 7. The connection portions 8 may have a hole to guide and hold a fastener element 12, e.g. a screw, a nail or something similar. The fastener element 12 interacts with the female port 5. Alternatively, the connection portion 8 may comprise a clipping member that interacts with the female port 5 on the cover member 4. The clipping member is a cheap and effective way to connect the holding members 6 and 7 to the cover member 4. The mounting apparatus 2 comprises a bottom surface 14 that is directed to the surface of the vehicle.

The cover member 4 comprises a hollow main body 100 forming a cavity which is open to a bottom side 102. The holding member 6 is positioned in the cavity of the hollow main body 100 from the bottom side 102 of the cover member 4. The main body 100 comprises an upper wall 104 having a convex shape in a longitudinal direction of the main body 100. A first side wall 106 and a second sidewall 108 extend from the upper wall 104 towards the bottom side 102 of the main body 100. The sidewalls 106 and 108 have a concave shape towards each other. In other words, the sidewalls 106 and 108 are bent inwardly towards each other. In another embodiment, the sidewalls may have a convex shape. The main body 100 has a front side 112 and a back side 114. On the front side 112, the upper wall 104 inclines towards the bottom side 102. On the back side 114, the upper wall 104 ends at a back wall 116 that extends from the upper wall 104 towards the bottom side 102. The back wall 116 comprises a concave shape, meaning that the back wall 116 is bent towards the front side 112 of the main body. In another embodiment, the back wall 116 has a concave shape. The shape of the back wall 116 has a positive impact on the airflow around the mounting apparatus 2. The upper wall 104 has an outer surface 118 that is directed away from the main body 100. An arrow shaped elevation 120 is positioned on the outer surface 118 with a tip directed to the front side 112. A height of the elevation 120 is constant over a length of the upper wall 104. The elevation 120 may extend from the front side 112 to the back side 114

The shape of the cover member 4 provides advantageous aerodynamic properties when placed on a surface of a vehicle. This reduces drag of the mounting apparatus 2. Preferably, the mounting apparatus 2 is attached to the surface such that the front side 112 of the cover member 4 is directed toward a moving direction of the vehicle. The elevation 120 further optimizes aerodynamic characteristics of the mounting apparatus 2.

The cover member 4 comprises in its upper wall 104 a mounting element 110 formed, for example, as a circular hole. The mounting element 110 allows a user to fix different portable devices to the mounting apparatus 2. The mounting element 110 has a central position on the upper wall 104. The mounting element 110 can be adapted to provide different mounting features for any portable device, e.g. signs, action cameras, measuring devices, tracking devices.

The holding members 6 and 7 have a rectangular shape in a first direction and a second direction. The holding members 6 and 7 may have another shape. Alternatively, the holding members 6 and 7 may each have a different shape. In this embodiment, the holding members 6 and 7 are identical. Therefore, only one of the holding members 6 and 7 is described in detail in the following paragraphs.

When the holding member 6 is positioned in the cover member 4, the first direction is from the back side 114 to the front side 112, and the second direction is from the sidewall 106 to the sidewall 108. In this embodiment, the holding member 6 is longer in the first direction than in the second direction. Alternatively, the holding member 6 may be longer in the second direction than in the first direction.

The holding member 6 comprises a first magnet receiving portion 200 and a second magnet receiving portion 202. The holding member 6 has a boundary portion 204 flexibly connecting the first magnet receiving portion 200 to the second magnet receiving portion 202 at respective facing ends of the first and second magnet receiving portions 200 and 202. This allows the receiving portions 200 and 202 to move relative to the boundary portion 204. There may be more than two magnet receiving portions in the holding member 6. At least one first magnet 206 is positioned in the first magnet receiving portion 200, and at least one second magnet 208 is positioned in the second magnet receiving portion 202. The magnet receiving portions 200 and 202 are configured to allow a user to replace magnets in these receiving portions 200 and 202. The magnet receiving portions 200 and 202 each have a bottom surface 203 that is in contact with a surface of a vehicle, when the mounting apparatus 2 is placed on the vehicle surface. The bottom surface 203 of the magnet receiving portions 200 and 202 forms the bottom surface 14 of the mounting apparatus 2. The facing ends of the receiving portions 200 and 202 form the first ends of the receiving portions.

Each of the magnet receiving portions 200 and 202 comprises an opposite end or second end that is opposite to the facing end or first end of the magnet receiving portions 200 and 202. On this second end, a side wall 209 extends in a normal direction from the magnet receiving portion 200 and 202 away from the bottom surface 203. The side wall 206 has the same length as the magnet receiving portion 200 and 202. In another embodiment, the side wall may extend only along a part of the second end of the magnet receiving portion 200 or 202. This would safe material, thereby reducing cost of the holding members 6 and 7. Atop end 210 of the side wall 209 being opposite to the second end of the magnet receiving portion 200 and 202 has a rounded shape. The top end 210 of the sidewall 209 curves from an outward facing surface downwards and merges into an inward facing surface. The outward facing surface is directed away from the boundary portion 204. The inward facing surface is directed towards the boundary portion 204. In the exemplary embodiment both magnet receiving portions 200 and 202 comprise the side wall 209. It is also sufficient when only one of the magnet receiving portions 200 and 202 comprises the side wall 209.

The magnet receiving portion 200 comprises a rib 201 extending from the first end of the magnet receiving portion 200 to the second end of the magnet receiving portion 200. This rib 201 further stabilizes the magnet receiving portion 200. In an alternative embodiment, the rib may be omitted. The same applies for the magnet receiving portion 202.

The boundary portion 204 comprises two connection portions 8. One connection portion 8 is positioned at a first portion of the holding member 6 on the boundary portion 204 and another connection portion 8 is positioned at a second portion of the holding member 6 on the boundary portion 204. The first portion being near a front facing portion of the boundary portion 204 and the second portion being near a back facing portion of the boundary portion 204 with respect to the mounting apparatus The connection portion 8 extends in a normal direction from an upper surface 211 of the boundary portion 204. The connection portion 8 is formed of a cylinder 212 with two ribs 214 being positioned on an outer surface of the cylinder 212 in a longitudinal direction of the cylinder 212. The connection portion 8 extends in the same direction as the side wall 209. The height of the connection portion 8 is greater than the height of the side wall 209 with respect to the bottom surface 203.

The boundary portion 204 comprises a first interlinkage 218 to connect the boundary portion 204 to the first end of the first magnet receiving portion 200, and a second interlinkage 220 to connect the boundary portion 204 to the first end of the second magnet receiving portion 202. The first interlinkage 218 is located at a top portion of the holding member 6. The top portion faces the tension member 10. The interlinkages 218 and 220 are positioned at a distance to a plane of the bottom surface 203 of the holding member 6 directed toward the surface S. The interlinkages 218 and 220 are formed for example as thin material bridges between the boundary portion 204 and the magnet receiving portions 200 and 202. The holding member 6 and the interlinkages 218 and 220 may comprise the same material. Alternatively, the interlinkages 218 and 220 may comprise a different material than the holding member 6, which allows to independently select the flexibility of the interlinkages 218 and 220.

The tension member 10 is positioned between the cover member 4 and the holding member 6 and 7. The cover member 4 comprises at least one guiding element 122, e.g a rib, that extends from the sidewall 106 and/or 108 into the cavity formed by the hollow main body 100. The tension member 10 is positioned inside the cavity 101 and positioned centrally by the guiding elements 122 inside the cavity 101. The holding member 6 is placed inside a cavity 302 and the holding member 7 is placed inside a cavity 304 of the tension member 10, such that the holding members 6 and 7 precisely fit into the cavities 302 and 304. When the holding members 6 and 7 are in an initial or attaching position, no clamping forces are applied to the holding members 6 and 7 by the tension member 10. The connection portions 8 of the holding members 6 and 7 extend through openings 306 in the tension member 10 towards the cover member 4. The connection portions 8 are not attached to the tension member 10. The ribs 214 of the connection portions 8 interact with the openings in the tension member 10 to provide guidance to the holding members 6 and 7.

The cavity 302 of the tension member 10 has a depth such that the holding member 6 protrudes from the cavity 302 in order to avoid contact of the tension member 10 with the surface to which the magnetic apparatus 2 is attached.

The mounting apparatus 2 may further comprise at least one second fastener element 14. The second fastener element 14 attaches the cover member 4 to at least the second end of the magnet receiving portion 200 of the holding member 6. Preferably, the second fastener element 14 is inserted through an opening in one of the side walls 106 and 108 into a port positioned on the magnet receiving portion 200 or 202 of the holding member 6, thereby fixing the cover member 4 and the holding member 6 to each other. With this second fastener element 14, the cover member 4 together with the boundary portion 204 cannot be lifted in the third direction to reduce the magnetic attraction force between the first and second magnets 206 and 208 and the surface of the vehicle in order to easily remove the mounting apparatus 2 from the surface. This provides a solution to avoid or to reduce the risk of stealing the mounting apparatus 2 by unauthorized personnel.

The material of the tension member 10 comprises the same material as the holding members 6 and 7. Alternatively, the tension member 10 may comprise a different material than the holding members 6 and 7.

In an initial or attaching position of the mounting apparatus 2, the bottom surface 203 of each of the holding members 6 and 7 is arranged in one plane. When the mounting apparatus 2 is placed on the surface of the vehicle, magnetic attraction forces of the first and second magnets 206 and 208 hold the mounting apparatus 2 on the surface. In order to remove the mounting apparatus 2 from the surface, a user grabs the cover member 4 and pulls the cover member 4 in an angular direction away from the surface. Because of the connection portion 8 connecting the cover member 4 with the boundary portion 204 of the holding member 6, the first ends of the magnet receiving portions 200 and 202 are lifted from the surface prior to the second ends of the magnet receiving portions 200 and 202. This allows a user to easily remove the mounting apparatus 2 from the surface, since the magnetic attraction forces of the first and second magnets 206 and 208 are gradually reduced by dislodging first a small part of the magnets 206 and 208. When placing the mounting apparatus 2 on another surface, the magnetic attraction forces of the first and second magnets 206 and 208 attract the holding member's bottom surface 203 towards the other surface, although the holding member 6 may not be in the initial or attaching position.

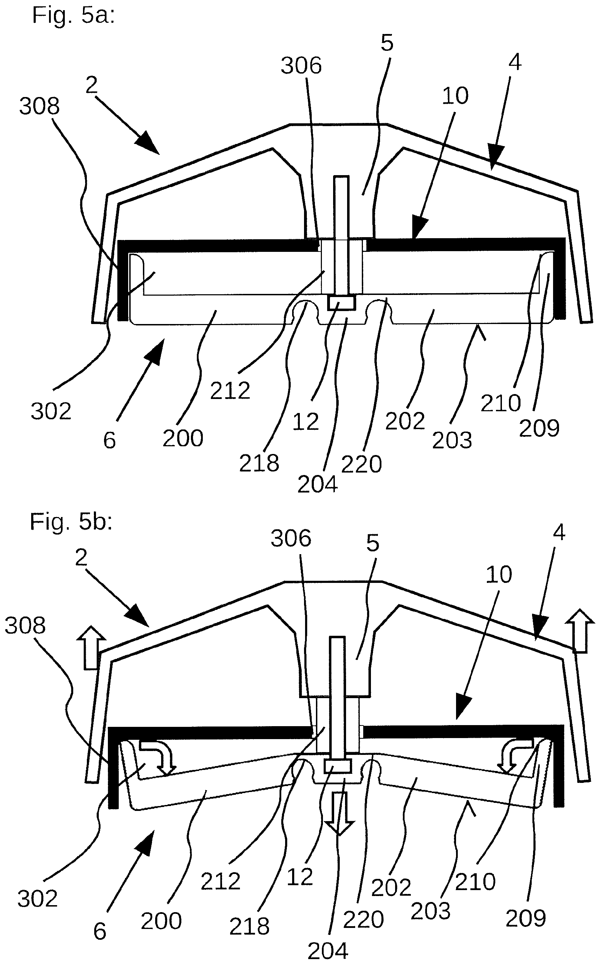

Figures 5a and 5b illustrate steps of removing the mounting apparatus 2 with the tension member 10 from a surface having magnetic properties. The removal of the mounting apparatus 2 from a vehicle's surface works in the same way as when no tension member 10 is present. As soon as the mounting apparatus 2 has been removed from the vehicle's surface, the tension member 10 applies a resetting force onto the sidewall 209 of the holding member 6 such that the holding member 6 is returned into its initial or attaching position before placing the mounting apparatus 2 onto another surface. The resetting forces result due to the top end 210 of the side wall 209 moving away from the boundary portion 204, when the boundary portion 204 is lifted by the cover member 4, thereby pressing against an inner surface 308 of the cavity 302 of the tension member 10. The tension member 10 and/or the side wall 209 is configured to return to its original shape when the side walls 209 press against the inner surface 308. The return to its original shape forms the resetting force.

The mounting apparatus can be easily applied onto a surface, particularly a vehicle's surface, having magnetic properties. When the surface has no magnetic properties, the mounting apparatus may be positioned on the surface and a magnetic element may be positioned behind the surface to attract the mounting apparatus towards the surface.

### Reference numerals:

- 2: mounting apparatus
- 4: cover member
- 5: female port
- 6: holding member
- 7: holding member
- 8: connection portion
- 10: tension member/chassis
- 12: fastener element
- 100: main body
- 101: cavity
- 102: bottom side
- 104: upper wall
- 106: first side wall
- 108: second side wall
- 110: mounting element
- 112: front side
- 114: back side
- 116: back wall
- 118: outer surface
- 120: elevation
- 122: guiding element
- 200: first magnet receiving portion
- 202: second magnet receiving portion
- 203: bottom surface
- 204: boundary portion
- 206: first magnet
- 208: second magnet
- 209: side wall
- 210: top end
- 211: upper surface
- 212: cylinder
- 214: ribs
- 218: first interlinkage
- 220: second interlinkage
- 302: cavity
- 304: cavity
- 306: opening
- 308: inner surface

## Claims

1. A mounting apparatus (2) for mounting a cover member (4) to a surface of a vehicle comprising:
a holding member (6,7) extending in a first direction and a second direction and having a first magnet receiving portion (200) and a second magnet receiving portion (202);
a cover member (4) that at least partially covers the holding member (6,7);
a first magnet (206) positioned in the first magnet receiving portion (200); and
a second magnet (208) positioned in the second magnet receiving portion (202);
wherein the first and second magnets (206,208) are configured for removably fixing the holding member (6,7) on the surface of the vehicle through magnetic attraction force in interaction with the surface of the vehicle;
wherein
the holding member (6,7) has a boundary portion (204) flexibly connecting the first magnet receiving portion (200) to the second magnet receiving portion (202) at respective facing ends of the first and second magnet receiving portions (200,202);
the cover member (4) is connected to the boundary portion (204) such that, when the cover member (4) is pulled in a third direction at an angle to the first and second directions while the mounting apparatus (2) is attached to the surface, the boundary portion (204) is lifted from the surface and each of the facing ends of the first magnet receiving portion (200) and the second magnet receiving portion (202) is lifted from the surface prior to opposite ends of the first magnet receiving portion (200) and the second magnet receiving portion (202) being lifted from the surface;
**characterized by**
a tension member (10) that is positioned between the holding member (6,7) and the cover member (4) and that is configured to provide a resetting force to the holding member (6,7) in a direction away from the cover member (4) when the boundary portion (204) is lifted from the surface.

2. The mounting apparatus (2) of claim 1, wherein the tension member (10) forms a cavity (302,304) and the holding member (6,7) is positioned in the cavity (302,304), which is configured to guide the holding member (6,7) when the boundary portion (204) is lifted from the surface and to provide the resetting force.

3. The mounting apparatus (2) of claim 1 or 2, wherein the tension member (10) is configured to bias the holding member (6,7) in an attaching position, a state in which the mounting apparatus (2) is not attached to the surface.

4. The mounting apparatus (2) of any of claims 1 to 3, wherein the holding member (6,7) has at least one side wall (209) attached to the opposite end of the first magnet receiving portion (200) or the opposite end of the second magnet receiving portion (202), the side wall (209) extending in the third direction for abutting against the tension member (10).

5. The mounting apparatus (2) of claim 4, wherein the at least one side wall (209) comprises a top end (210) opposite to an end with which the side wall (209) is attached to the opposite end of the first magnet receiving portion (200) or the opposite end of the second magnet receiving portion (202);
wherein the top end (210) of the at least one side wall (209) has a rounded shape.

6. The mounting apparatus (2) of claims 4 or 5, wherein the top end (210) of the at least one side wall (209) of the holding member (6,7) is in contact with the tension member (10), wherein the tension member (10) is configured to provide the resetting force to the top end (210) of the side wall (209).

7. The mounting apparatus (2) of any of the previous claims, wherein the holding member (6,7) is elastic.

8. The mounting apparatus (2) of any of the previous claims, wherein at least one of the first and second magnets (206,208) is removably attached to the holding member (6,7).

9. The mounting apparatus (2) of any of the previous claims, wherein the boundary portion (204) comprises a first flexible interlinkage (218) to connect the boundary portion (204) to the facing end of the first magnet receiving portion (200), and a second flexible interlinkage (220) to connect the boundary portion (204) to the facing end of the second magnet receiving portion (202).

10. The mounting apparatus (2) of claim 9, wherein the first interlinkage (218) is located at a top portion of the holding member (6,7), wherein the top portion is directed towards the cover member (4) and is positioned at a distance to a plane of a bottom surface (203) of the first and second magnet receiving portions (200,202) of the holding member (6,7) directed towards the surface.

11. The mounting apparatus (2) of any of the previous claims, wherein the cover member (4) is configured to cover the holding member (6,7), such that only a bottom surface (14) of the mounting apparatus (2) protrudes from the cover member (4).

12. The mounting apparatus (2) of any of the previous claims, wherein the cover member (4) is attached to the boundary portion (204) using a removable or fixed first fastener element (12), particularly a bolt or a screw.

13. The mounting apparatus (2) of any of the previous claims, further comprising at least one insertable second fastener element that is configured to fasten the cover member (4) to the opposite ends of the one of the magnet receiving portions of the holding member (6,7) such that, when the at least one second fastener element is inserted through an opening in one of the side walls (106, 108) of the cover member (4) into a port positioned on one of the magnet receiving portions (200, 202), the cover member (4) cannot be pulled in the third direction.

## Patentansprüche

1. Befestigungsvorrichtung (2) zum Befestigen eines Abdeckelements (4) an einer Oberfläche eines Fahrzeugs, aufweisend:
ein Halteelement (6, 7), das sich in einer ersten Richtung und einer zweiten Richtung erstreckt und einen ersten Magnetaufnahmebereich (200) und einen zweiten Magnetaufnahmebereich (202) aufweist;
ein Abdeckelement (4), das das Halteelement (6, 7) zumindest teilweise abdeckt;
einen ersten Magneten (206), der in dem ersten Magnetaufnahmebereich (200) positioniert ist; und
einen zweiten Magneten (208), der in dem zweiten Magnetaufnahmebereich (202) positioniert ist;
wobei der erste und der zweite Magnet (206, 208) dazu ausgebildet sind, das Halteelement (6, 7) an der Oberfläche des Fahrzeugs durch eine magnetische Anziehungskraft in Wechselwirkung mit der Oberfläche des Fahrzeugs lösbar zu befestigen;
wobei das Halteelement (6, 7) einen Begrenzungsbereich (204) aufweist, der den ersten Magnetaufnahmebereich (200) mit dem zweiten Magnetaufnahmebereich (202) an jeweiligen einander zugewandt gegenüberliegenden Enden des ersten und zweiten Magnetaufnahmebereichs (200, 202) flexibel verbindet;
wobei das Abdeckelement (4) mit dem Begrenzungsbereich (204) derart verbunden ist, dass dann, wenn das Abdeckelement (4) in einer dritten Richtung in einem Winkel zu der ersten und zweiten Richtung gezogen wird, während die Befestigungsvorrichtung (2) an der Oberfläche angebracht ist, der Begrenzungsbereich (204) von der Oberfläche abgehoben wird und jedes der einander zugewandt gegenüberliegenden Enden des ersten Magnetaufnahmebereichs (200) und des zweiten Magnetaufnahmebereichs (202) von der Oberfläche abgehoben wird, bevor einander gegenüberliegende Enden des ersten Magnetaufnahmebereichs (200) und des zweiten Magnetaufnahmebereichs (202) von der Oberfläche abgehoben werden;
**gekennzeichnet durch**
ein Spannelement (10), das zwischen dem Halteelement (6, 7) und dem Abdeckelement (4) positioniert ist und dazu ausgebildet ist, eine Rückstellkraft in Richtung von dem Abdeckelement (4) weg an dem Halteelement (6,7) bereitzustellen, wenn der Begrenzungsbereich (204) von der Oberfläche abgehoben wird.

2. Befestigungsvorrichtung (2) nach Anspruch 1,
wobei das Spannelement (10) einen Hohlraum (302, 304) bildet und das Halteelement (6, 7) in dem Hohlraum (302, 304) positioniert ist, der dazu ausgebildet ist, das Halteelement (6,7) zu führen, wenn der Begrenzungsbereich (204) von der Oberfläche abgehoben wird, sowie die die Rückstellkraft bereitzustellen.

3. Befestigungsvorrichtung (2) nach Anspruch 1 oder 2,
wobei das Spannelement (10) dazu ausgebildet ist, das Halteelement (6, 7) in eine Anbringposition vorzuspannen, bei der es sich um einen Zustand handelt, in dem die Befestigungsvorrichtung (2) nicht an der Oberfläche befestigt ist.

4. Befestigungsvorrichtung (2) nach einem der Ansprüche 1 bis 3,
wobei das Halteelement (6, 7) mindestens eine Seitenwand (209) aufweist, die an dem gegenüberliegenden Ende des ersten Magnetaufnahmebereichs (200) oder dem gegenüberliegenden Ende des zweiten Magnetaufnahmebereichs (202) angebracht ist, wobei sich die Seitenwand (209) in der dritten Richtung erstreckt, um an dem Spannelement (10) anzuliegen.

5. Befestigungsvorrichtung (2) nach Anspruch 4,
wobei die mindestens eine Seitenwand (209) ein oberes Ende (210) aufweist, das einem Ende gegenüberliegt, mit dem die Seitenwand (209) an dem gegenüberliegenden Ende des ersten Magnetaufnahmebereichs (200) oder dem gegenüberliegenden Ende des zweiten Magnetaufnahmebereichs (202) angebracht ist;
wobei das obere Ende (210) der mindestens einen Seitenwand (209) eine abgerundete Form aufweist.

6. Befestigungsvorrichtung (2) nach Anspruch 4 oder 5,
wobei das obere Ende (210) der mindestens einen Seitenwand (209) des Halteelements (6, 7) mit dem Spannelement (10) in Kontakt steht, wobei das Spannelement (10) dazu ausgebildet ist, die Rückstellkraft an dem oberen Ende (210) der Seitenwand (209) bereitzustellen.

7. Befestigungsvorrichtung (2) nach einem der vorhergehenden Ansprüche, wobei das Halteelement (6, 7) elastisch ist.

8. Befestigungsvorrichtung (2) nach einem der vorhergehenden Ansprüche, wobei mindestens einer von dem ersten und dem zweiten Magneten (206, 208) an dem Halteelement (6, 7) lösbar angebracht ist.

9. Befestigungsvorrichtung (2) nach einem der vorhergehenden Ansprüche, wobei der Begrenzungsbereich (204) eine erste flexible Zwischenverbindung (218) aufweist, um den Begrenzungsbereich (204) mit dem zugewandten Ende des ersten Magnetaufnahmebereichs (200) zu verbinden, sowie eine zweite flexible Zwischenverbindung (220) aufweist, um den Begrenzungsbereich (204) mit dem zugewandten Ende des zweiten Magnetaufnahmebereichs (202) zu verbinden.

10. Befestigungsvorrichtung (2) nach Anspruch 9,
wobei sich die erste Zwischenverbindung (218) an einem oberen Bereich des Halteelements (6, 7) befindet, wobei der obere Bereich zu dem Abdeckelement (4) gerichtet ist und in einem Abstand von einer Ebene einer unteren Oberfläche (203) des ersten und des zweiten Magnetaufnahmebereichs (200, 202) des Halteelements (6, 7) positioniert ist, die zu der Oberfläche gerichtet ist.

11. Befestigungsvorrichtung (2) nach einem der vorhergehenden Ansprüche, wobei das Abdeckelement (4) dazu ausgebildet ist, dass es das Halteelement (6, 7) derart abdeckt, dass nur eine untere Oberfläche (14) der Befestigungsvorrichtung (2) von dem Abdeckelement (4) hervorsteht.

12. Befestigungsvorrichtung (2) nach einem der vorhergehenden Ansprüche, wobei das Abdeckelement (4) an dem Begrenzungsbereich (204) unter Verwendung eines lösbaren oder fixierten ersten Befestigungselements (12), insbesondere eines Bolzens oder einer Schraube, befestigt ist.

13. Befestigungsvorrichtung (2) nach einem der vorangehenden Ansprüche, die ferner mindestens ein einsetzbares zweites Befestigungselement aufweist, das dazu ausgebildet ist, das Abdeckelement (4) an den gegenüberliegenden Enden von dem einen der Magnetaufnahmebereiche des Halteelements (6, 7) derart zu befestigen, dass dann, wenn das mindestens eine zweite Befestigungselement durch eine Öffnung in einer der Seitenwände (106, 108) des Abdeckelements (4) hindurch in eine an einem der Magnetaufnahmebereiche (200, 202) angeordnete Öffnung eingesetzt ist, das Abdeckelement (4) nicht in die dritte Richtung gezogen werden kann.

## Revendications

1. Appareil de montage (2) pour monter un élément de couverture (4) sur une surface d'un véhicule comprenant :
un élément de maintien (6, 7) s'étendant dans une première direction et une deuxième direction et ayant une première partie de réception d'aimant (200) et une deuxième partie de réception d'aimant (202) ;
un élément de couverture (4) qui couvre au moins partiellement l'élément de maintien (6, 7) ;
un premier aimant (206) positionné dans la première partie de réception d'aimant (200) ; et
un deuxième aimant (208) positionné dans la deuxième partie de réception d'aimant (202) ;
dans lequel les premier et deuxième aimants (206, 208) sont configurés pour fixer de manière amovible l'élément de maintien (6, 7) sur la surface du véhicule par une force d'attraction magnétique en interaction avec la surface du véhicule ;
dans lequel
l'élément de maintien (6, 7) présente une partie de limite (204) reliant de manière flexible la première partie de réception d'aimant (200) à la deuxième partie de réception d'aimant (202) au niveau des extrémités respectives se faisant face des première et deuxième parties de réception d'aimant (200, 202) ;
l'élément de couverture (4) est connecté à la partie de limite (204) de telle sorte que, lorsque l'élément de couverture (4) est tiré dans une troisième direction à un angle par rapport aux première et deuxième directions alors que le dispositif de montage (2) est fixé à la surface, la partie de limite (204) est soulevée de la surface et chacune des extrémités en regard de la première partie de réception d'aimant (200) et de la deuxième partie de réception d'aimant (202) est soulevée de la surface avant que les extrémités opposées de la première partie de réception d'aimant (200) et de la deuxième partie de réception d'aimant (202) soient soulevées de la surface,
**caractérisé en ce que**
un élément de tension (10) qui est positionné entre l'élément de maintien (6, 7) et l'élément de couvercle (4) et qui est configuré pour fournir une force de rappel à l'élément de maintien (6, 7) dans une direction s'éloignant de l'élément de couvercle (4) lorsque la partie limite (204) est soulevée de la surface.

2. Appareil de montage (2) selon la revendication 1, dans lequel l'élément de tension (10) forme une cavité (302, 304) et l'élément de maintien (6, 7) est positionné dans la cavité (302, 304), qui est configurée pour guider l'élément de maintien (6, 7) lorsque la partie de limite (204) est soulevée de la surface et pour fournir la force de rappel.

3. Appareil de montage (2) selon la revendication 1 ou 2, dans lequel l'élément de tension (10) est configuré pour solliciter l'élément de maintien (6, 7) dans une position de fixation, un état dans lequel le dispositif de montage (2) n'est pas fixé à la surface.

4. Appareil de montage (2) selon l'une quelconque des revendications 1 à 3, dans lequel l'élément de maintien (6, 7) comporte au moins une paroi latérale (209) fixée à l'extrémité opposée de la première partie de réception d'aimant (200) ou à l'extrémité opposée de la deuxième partie de réception d'aimant (202), la paroi latérale (209) s'étendant dans la troisième direction pour venir en butée contre l'élément de tension (10).

5. Appareil de montage (2) selon la revendication 4, dans lequel l'au moins une paroi latérale (209) comprend une extrémité supérieure (210) opposée à une extrémité avec laquelle la paroi latérale (209) est fixée à l'extrémité opposée de la première partie de réception d'aimant (200) ou à l'extrémité opposée de la deuxième partie de réception d'aimant (202) ;
dans lequel l'extrémité supérieure (210) de l'au moins une paroi latérale (209) a une forme arrondie.

6. Appareil de montage (2) selon la revendications 4 ou 5, dans lequel l'extrémité supérieure (210) de l'au moins une paroi latérale (209) de l'élément de maintien (6, 7) est en contact avec l'élément de tension (10), dans lequel l'élément de tension (10) est configuré pour fournir la force de rappel à l'extrémité supérieure (210) de la paroi latérale (209).

7. Appareil de montage (2) selon l'une quelconque des revendications précédentes, dans lequel l'élément de maintien (6, 7) est élastique.

8. Appareil de montage (2) selon l'une quelconque des revendications précédentes, dans lequel au moins l'un des premier et deuxième aimants (206, 208) est fixé de manière amovible à l'élément de maintien (6, 7).

9. Appareil de montage (2) selon l'une quelconque des revendications précédentes, dans lequel la partie de limite (204) comprend une première interconnexion flexible (218) pour connecter la partie de limite (204) à l'extrémité en regard de la première partie de réception d'aimant (200), et une deuxième interconnexion flexible (220) pour connecter la partie de limite (204) à l'extrémité en regard de la deuxième partie de réception d'aimant (202).

10. Appareil de montage (2) selon la revendication 9, dans lequel la première interconnexion (218) est située au niveau d'une partie supérieure de l'élément de maintien (6, 7), dans lequel la partie supérieure est dirigée vers l'élément de couverture (4) et est positionnée à une distance d'un plan d'une surface inférieure (203) des première et deuxième parties de réception d'aimant (200, 202) de l'élément de maintien (6, 7) dirigée vers la surface.

11. Appareil de montage (2) selon l'une quelconque des revendications précédentes, dans lequel l'élément de couverture (4) est configuré pour couvrir l'élément de maintien (6, 7), de sorte que seule une surface inférieure (14) du dispositif de montage (2) fait saillie de l'élément de couverture (4).

12. Appareil de montage (2) selon l'une quelconque des revendications précédentes, dans lequel l'élément de recouvrement (4) est fixé à la partie de limite (204) à l'aide d'un premier élément de fixation (12) amovible ou fixe, notamment un boulon ou une vis.

13. Appareil de montage (2) selon l'une quelconque des revendications précédentes, comprenant en outre au moins un deuxième élément de fixation insérable qui est configuré pour fixer l'élément de couverture (4) aux extrémités opposées de l'une des parties de réception d'aimant de l'élément de maintien (6, 7) de sorte que, lorsque l'au moins un deuxième élément de fixation est inséré à travers une ouverture dans l'une des parois latérales (106, 108) de l'élément de couverture (4) dans un port positionné sur l'une des parties de réception d'aimant (200, 202), l'élément de couverture (4) ne peut pas être tiré dans la troisième direction.
